## Europäisches Patentamt
## European Patent Office
## Office européen des brevets

(19)

(11) Publication number: **0 018 025**
**B1**

(12) **EUROPEAN PATENT SPECIFICATION**

(45) Date of publication of patent specification: **01.06.83**

(51) Int. Cl.³: **C 08 F 10/00, C 08 F 4/64, C 08 F 297/08, C 08 F 4/02**

(21) Application number: **80200263.4**

(22) Date of filing: **22.03.80**

(54) **Polymerization of alkenes-1 and shaped articles made thereby.**

(30) Priority: **01.04.79 NL 7902534**

(43) Date of publication of application:
**29.10.80 Bulletin 80/22**

(45) Publication of the grant of the patent:
**01.06.83 Bulletin 83/22**

(84) Designated Contracting States:
**AT BE DE FR GB IT NL SE**

(56) References cited:
**DE - A - 2 739 608**
**FR - A - 2 039 843**
**FR - A - 2 342 995**
**FR - A - 2 377 432**

(73) Proprietor: **STAMICARBON B.V.**
**Postbus 10**
**NL-6160 MC Geleen (NL)**

(72) Inventor: **Loontjens, Jacobus Antonius**
**Synagogeplantsoen 76**
**NL-6231 KK Meerssen (NL)**
Inventor: **Jacomen, Denise Irene Liliane**
**Guido Gezellelaan 34**
**NL-6165 EK Geleen (NL)**

(74) Representative: **Hoogstraten, Willem Cornelis Roeland et al,**
**OCTROOIBUREAU DSM Postbus 9**
**NL-6160 MA Geleen (NL)**

Courier Press, Leamington Spa, England

Polymerization of alkenes-1 and shaped articles made thereby

The invention relates to a process for the polymerization of alkenes-1 and for the copolymerization of alkenes-1 with each other or with ethylene in at least two stages, with application of a catalyst system consisting of a titanium halide component, containing a halogenated titanium compound, an electron donor and a magnesium halide, and an organometallic component derived from a metal of one of the groups I—III of the Periodic System of the Elements

Such process is known from the German 'Offenlegungsschrift' No. 2.739.608, in which a method is described for two-stage polymerization of alkenes-1 with a similar catalyst system, in which the titanium halide component consists of a complex of a titanium halide and an electron donor on an anhydrous magnesium halide as carrier, and in which a trialkyl aluminium compound or a dialkyl aluminium halide, for instance, is used as organometal component. Alcohols, phenols, ketones, aldehydes, esters of organic acids, acid halides, ethers, amides, amines, nitriles, and others, are mentioned as electron donor.

The known method has the drawback that the catalyst system applied, for instance a complex of $TiCl_4$ and ethyl benzoate — which complex may additionally contain a silicon compound — on anhydrous magnesium chloride as carrier, in combination with triethyl aluminium that is partly complexed with ethyl benzoate, does have a high initial activity in the polymerization of propylene, butylene-1, 4-methyl pentylene-1 and other alkenes-1, but rapidly loses its activity during the polymerization. This makes this known catalyst system little suitable for multistage polymerization processes in which a normal polymerization time of more than half an hour is required for the first stage before a second stage is started. This is of particular significance in so-called block copolymerization, in which in a first stage of for instance more than half an hour, propylene, butylene-1, 4-methyl pentylene-1 or another alkene-1 with at least 3 carbon atoms per molecule is polymerized, in the presence of a minor quantity of ethylene or not, after which in a second stage another monomer or a mixture of monomers of a different composition is polymerized in the presence of the polymer formed in the first stage.

According to the invention, a process for polymerization of alkenes-1 and for copolymerization of alkenes-1 with each other or with ethylene in at least two stages with application of a catalyst system consisting of a titanium halide component, containing a halogenated titanium compound, an electron donor and a magnesium halide, and an organometallic component, derived from a metal of one of the groups I—III of the Periodic System of the Elements, is characterized in that the halogenated titanium compound used is a titanium halide phenolate of the formula $Ti_nX_aA_b$, in which X represents a halogen atom and A the acid radical of a phenol, n is a whole number of at least 1, and a and b are such numbers that a/n and b/n are both 1—3, on the understanding that (a + b)/n is equal to 3—4, and that the polymerisation time in the first stage is more than 0.5 hour. The invention also relates to a shaped object consisting in whole or in part of polymer obtained with application of such polymerisation process.

The process according to the invention offers the considerable advantage that the activity of the catalyst system declines much less rapidly, so that in multi-stage polymerization processes, for instance block copolymerizations as meant above, in particular with first-stage polymerization times of more than half an hour, a considerably larger proportion of block copolymer, in which in one polymer molecule blocks differing in monomer composition may be present, is obtained than can be realized by the known method.

The titanium halide phenolate should of course be distinguished from the titanium halide-phenol complex. The formula of the titanium halide phenolate used according to the invention may be, for instance, with tetravalent titanium and a Ti:phenolate ratio of 1:1, $TiCl_3(OC_6H_5)$, while the formula of the 1:1 complex of titanium (IV) chloride and unsubstituted phenol would be $TiCl_4.C_6H_5OH$.

The halogen in the titanium halide phenolate is preferably chlorine, but may also be bromine and/or iodine, for instance.

The phenolate may be, for instance, the acid radical derived from unsubstituted phenol or from phenol substituted with one or more alkyl or alkoxy groups with for instance 1—6 carbon atoms per group, for instance cresol, methoxy phenol, xylenol, ethyl phenol, propyl phenol, octyl phenol, dibutyl phenol, cumyl phenol or naphthol. Cresolates and methoxy phenolates are particularly suitable, while cresolates offer the advantage of particularly high stereospecificity of the catalyst system. The benzene nucleus of the phenolate may contain other substituents which are non-detrimental in the polymerization reaction, for instance one or more halide substituents. The phenolate group may have, for instance, 6—18 carbon atoms, preferably 6—12 carbon atoms.

The halide:phenolate ratio in the titanium halide phenolate is preferably between 1:1 and 3:1. Besides the titanium halide phenolate, a phenolate-free titanium halide can be used, in the halogenated titanium compound, if so desired. Preferably, a halide phenolate of tetravalent titanium is used. The value of n is often 1, but may also be 2 or higher, especially if a poly- phenolate is used.

Specific examples of titanium halide phenolates to be used in the process according to the invention are titanium(V) trichloride monophenolate, titanium(IV) dichloride diphenolate, titanium(IV) trichloride mono-p-cresolate, titanium(III) dichloride mono-o-cresolate, titanium (IV) monochloride tri-1-naphtholate, titanium (IV) trichloride mono-(p-chlorophenolate), titanium (IV) tribromide mono-p-cresolate, titanium(IV) tribromide mono(xylenolate-isomers mixture) and titanium(IV) monoiodide tri-anisolate. Such compounds can be obtained for instance through conversion of the relevant titanium halide with the stoechiometric quantity of the relevant phenol under liberation of the relevant hydrogen halide, or through double conversion of a titanium halide with a metal phenolate, for instance an alkali metal phenolate.

It is pointed out that application of a titanium halide phenolate on a magnesium-halide carrier as catalyst component in the polymerization of alkenes-1 has been suggested as a possibility before (Dutch patent applications No.'s 7003919 and 7702174, laid open for public inspection). However, the considerable advantages that can be obtained in multi-stage polymerization with first stage polymerization time of more than half an hour cannot be derived in any manner from this state of the art.

Besides the titanium halide phenolate, the titanium halide component of the catalyst contains an electron donor. It is assumed that this electron donor is present as a complex with the halogenated titanium compound. The electron donor used may be one or more of the compounds used in the known manner in similar catalyst systems, for instance oxygen-containing electron donors such as water, alcohols, phenols, ketones, aldehydes, acid halides, carboxylic acids, acids, esters, ethers and amides, or nitrogen-containing electron donors such as ammonia, amines, nitriles, isocyanates and nitro compounds.

Specific examples of suitable electron donors are alcohols with 1—18 carbon atoms per molecule, for instance methanol, ethanol, propanol, hexanol, stearyl alcohol, benzyl alcohol, phenyl ethyl alcohol, or cumyl alcohol; phenols with 6—18 carbon atoms per molecule, for instance phenol, cresol, xylenol, ethyl phenol, propyl phenol, octyl phenol, dibutyl phenol, cumyl phenol or naphthol; ketones with 3—15 carbon atoms per molecule, for instance acetone, methyl ethyl ketone, methyl isobutyl ketone, acetophenone or benzophenone; aldehydes with 2—15 carbon atoms per molecule, for instance ethanal, propanal, heptanal, benzaldehyde, tolualdehyde or naphthaldehyde; acid halides with 2—15 carbon atoms per molecule, for instance acetyl chloride, benzoyl chloride or toluyl chloride; amides with 2—15 carbon atoms per molecule, for instance formamide, acetamide, benzamide or toluamide;

amines with 2—18 carbon atoms per molecule, for instance methylamine, ethylamine, diethylamine, triethylamine, tributylamine, piperidine, tribenzylamine, aniline, pyridine, picoline or ethylene diamine; nitriles with 2—15 carbon atoms per molecule, for instance acetonitrile, benzonitrile or tolunitrile; or nitro compounds, for instance nitrobenzene. Preference is given to ethers with 2—20 carbon atoms per molecule, for instance dimethyl ether, di-n-butyl ether, di-i-amyl ether, tetrahydrofuran, anisole or diphenyl ether, and in particular organic esters with 2—40, in particular 2—18, carbon atoms per molecule. The acid component of the ester mostly contains 1—9 carbon atoms per molecule or is a natural fatty acid, while the alcohol component mostly contains 1—6 carbon atoms per molecule.

Examples of suitable esters are methyl formate, cyclohexyl formate, ethyl acetate, vinyl acetate, amyl acetate, 2-ethylhexyl acetate, cyclohexyl acetate, ethyl propionate, amyl propionate, methyl butyrate, ethyl valerate, methyl chloroacetate, ethyl dichloroacetate, methyl methacrylate, ethyl acrylate, n-butyl acrylate, ethyl crotonate, dimethyl maleate, ethyl cyclohexane carboxylate, methyl benzoate, ethyl benzoate, i-butyl benzoate, octyl benzoate, cyclohexyl benzoate, phenyl benzoate, benzyl benzoate, phenyl ethyl benzoate, methyl toluate, ethyl toluate, i-amyl toluate, methyl anisate, $\gamma$-butyrolacton, $\varepsilon$-caprolacton, coumarin, phthalide and ethylene carbonate. Particular preference is given to esters derived from aromatic acids, in particular esters of benzoic acid with alkyl or alkoxy groups substituted or not. Alkyl esters with 1—4 carbon atoms per alkyl group, in particular methyl or ethyl esters of benzoic acid, o- or p-toluene carboxylic acid, p-methoxy benzoic acid or phthalic acid, are preferred in particular.

Moreover, the catalyst component contains a magnesium halide. Preferably, this is at least virtually anhydrous and preferably also at least virtually free of magnesium oxide. The expressions 'at least virtually anhydrous' and 'at least virtually free of magnesium oxide' are understood to mean here that the concentration of water and magnesium oxide, respectively, in the magnesium halide is insignificant, i.e. as regards water at any rate less than 0.2% by wt., preferably at most 0.1% by wt., and as regards magnesium oxide at any rate less than 0.1, preferably at most 0.01, calculated as mgeq of base titratable with a dilute strong acid, for instance 0.1 N hydrochloric acid, per g of magnesium halide.

The magnesium halide may further contain minor quantities of other metal iions, for instance sodium, tin, silicon or germanium. It may have been prepared by any known method, for instance by dehydration of water-containing magnesium halide or by conversion of organic magnesium compounds such as Grignard's reagents or dialkyl magnesium compounds with, for instance, hydrogen chloride or hydrogen bromide or an alkyl chloride or alkyl bromide.

Suitable magnesium halides are in particular magnesium bromide and, by preference, magnesium chloride. Preferably, a magnesium halide is used which is at least virtually magnesium oxide free, that may be prepared by heating a water and/or magnesium oxide containing magnesium halide in a gas flow of carbon halide vapour, for instance vapour of carbon tetrachloride, and/or a mixture of carbon monoxide and halogen in a mixing ratio of for instance between 0.1:1 and 10:1, for, for instance, 10—30 h at a temperature of 575—1000 K.

The titanium halide component may also contain a combination of a magnesium halide and a aluminium halide. The titanium:magnesium:aluminium weight ratio then preferably amounts to 1:(0.5—20):(0.1—5) and more in particular 1:(0.5—2.5):(0.2—1). The magnesium halide and the aluminium halide, for instance, can be combined by grinding the two compounds together.

A suitable material for use in the titanium halide component may also be obtained by converting a combination of an organic aluminium compound and an organic magnesium compound into the corresponding metal halide, for instance by precipitation of the metal halide from a solution of the organic metal compounds in a suitable solvent, for instance a hydrocarbon solvent. Suitable precipitation agents are for instance the hydrogen halides and aliphatic halogen compounds. The halogen preferably is chlorine, but may also be bromine or iodine, for instance. As precipitation agent also free halogens and interhalogen compounds may be used, for instance $Cl_2$, $Br_2$, $I_2$, $ICl$, $ICl_3$ or $BrCl$. The organic metal compounds preferably contain one or more hydrocarbon groups bonded directly to the metal. The hydrocarbon groups preferably contain 1—10 carbon atoms. Examples of aluminium compounds are trialkyl aluminium compounds, dialkyl aluminium halides, in particular a chloride or a bromide, diethyl aluminium chloride and bromide being highly suitable, and (mono-) alkyl aluminium dihalides, while the organic magnesium compound may be, for instance, a dialykl magnesium or an alkyl magnesium halide.

The combining of the various constituent elements of the halogenated titanium component, may be done by any known method. Preferably, first a complex of the halogenated titanium compound and the electron donor is prepared.

The titanium halide phenolate-electron donor-complexes may be obtained by any known method, for instance by contacting the components of the complex with each other.

The titanium halide phenolate may be applied to the carrier material in any known manner, for instance by simple mixing, preferably by grinding together, for instance in a ball mill, a vibration mill or beater mill. The mixing may be done in the co-presence of an organic or inorganic filler, for instance lithium chloride, calcium carbonate, calcium chloride, chromium(II) chloride, barium chloride, sodium sulphate, sodium carbonate, titanium dioxide, sodium tetraborate, calcium orthophosphate, calcium sulphate, barium carbonate, aluminium sulphate, borium trioxide, aluminium oxide, silicon oxide, polyethylene, polypropylene or polystyrene. The filler may also have been taken up in the carrier material beforehand. It is possible to first form a titanium halide phenolate-electron donor-complex and apply it to the carrier, or also to first apply the non-complexed titanium halide phenolate on the carrier and add the electron donor afterwards, either before or after addition of the organoaluminium component.

It may be advantageous to treat the titanium halide component with a halogen, for instance bromium, or with an interhalogen compound, preferably in the absence of an inactive solvent.

The titanium content of the complexed titanium halide component usually amounts to between 0.1 and 10% by wt. The electron donor is present in the titanium halide component in a quantity of for instance up to 5 molecules per titanium atom. A typical example of the composition of the titanium halide component, although varying in dependence on the circumstances of the catalyst preparation, is: 2—10% by wt. of titanium, 16—25% by wt. of magnesium, 45—65% by wt. of halogen and 5—25% by wt. of the electron donor.

The organometallic component contains a compound of a metal of one of the groups I—III of the Periodic System with at least one hydrocarbon radical bonded directly to the metal. Examples are trialkyl aluminium compounds, alkyl aluminium alkoxides, alkyl aluminium hydrides, alkyl aluminium halides, dialkyl zinc compounds and dialkyl magnesium compounds, of which the organoaluminium compounds are particularly suitable. Examples of the organoaluminium compounds are trialkyl or trialkenyl aluminium compounds, for instance triethyl aluminium, tripropyl aluminium, triisobutyl aluminium, triisoprenyl aluminium, trihexyl aluminium and trioctyl aluminium; alkyl aluminium compounds in which a number of the aluminium atoms are connected via an oxygen or nitrogen atom, for instance $(C_2H_5)_2AlOAl(C_2H_5)_2$, $(i-C_4H_9)_2AlOAl(i-C_4H_9)_2$ or $(C_2H_5)_2AlNHAl(C_2H_5)_2$, dialkyl aluminium hydrides such as diethly aluminium hydride or diisobutyl aluminium hydride; dialkyl aluminium halides, in particular a chloride or bromide, diethylaluminium chloride and bromide being particularly suitable, while also other dialkyl aluminium halides with preferably 1—10 carbon atoms in the alkyl group, such as for instance di-n-butyl aluminium chloride and methyl-n-butyl aluminium chloride, can be used; and dialkyl aluminium alkoxides or phenoxides, for instance diethyl ethoxy aluminium or diethyl phenoxy aluminium. The trialkyl aluminium compounds deserve most preference.

The organometal compound may also contain a trialkyl aluminium compound as well as a dialkyl aluminium halide or a mixture of a dialkyl magnesium compound and a mono-alkyl aluminium dhalide. The alkyl groups of the organoaluminium compounds preferably contain 1—10 carbon atoms each. The alkyl groups of the dialkyl magnesium compound preferably contain 1—10 carbon atoms each or are a palmityl or stearyl group. Examples of suitable dialkyl magnesium compounds are diethyl magnesium, di-n-butyl magnesium, di-n-hexyl magnesium and di-n-octyl magnesium. The monoalkyl aluminium dihalide preferably is a chloride or a bromide. Ethyl aluminium dichloride or bromide is particularly suitable, but also other mono-alkyl aluminium dihalides with preferably 1—10 carbon atoms in the alkyl group may be used, such as isopropyl aluminium dichloride, n-butyl aluminium dibromide or n-octyl aluminium dichloride. The molar ratio between the dialkyl magnesium compound and the monoalkyl aluminium dihalide may be between, for instance, 0.1 and 1, preferably between 0.3 and 0.6. Too high a molar ratio leads to insufficiently stereospecific catalysts, while insufficient catalyst activity results if it is too low.

The organometal component preferably consists of a complex of an organic metal compound, in particular a trialkyl aluminium compound, with an ester of an oxygen-containing organic acid. Suitable esters are the same esters as may be used in the titanium halide component, in particular again the esters or aromatic carboxylic acids. For brevity's sake, reference is made to the foregoing. Preferably part of the organic metal compound, for instance 50—80%, is present in a non-complex condition.

The Al:Ti ratio is generally between 10 and 1000; the molecule-atom ratio of the total of bonded Lewis base in the catalyst to Ti is in general between 5 and 500.

The process according to the invention can be mainly applied for stereospecific polymerization of alkenes-1 with 3—6 carbon atoms per molecule, such as propylene, butylene-1, 4-methyl pentylene-1 and hexylene-1, and for copolymerization of these alkenes-1 with each other and/or with ethylene. Copolymers with random arrangement of the various monomer units as well as block copolymers can be manufactured. The advantages of the method according to the invention, however, are most apparent in block copolymerization as meant above. If ethylene is used as comonomer, it is normally used in minor quantities; for instance, 30% by wt. at most, more in particular between 1 and 15% by wt., is incorporated in the polymer. The process according to the invention is of importance in particular for manufacture of isotactic polypropylene, random copolymers of propylene with minor quantities of ethylene and in particular block copolymers of propylene and ethylene. For the manufacture of block copolymers, any desired sequence of monomer additions may be applied.

The process accoridng to the invention is particularly advantageous for block copolymerization processes in which in the first stage substantially propylene or a higher alkene-1 is polymerized and in a subsequent stage substantially ethylene. The advantages of the method according to the invention are apparent if the polymerization time in the first stage is more than half an hour.

The circumstances under which the polymerization reaction according to the invention is carried out do not deviate from those known in the art. The reaction may be carried out in the gas phase or in the presence of a diluent. The diluent may be inert or also a monomer in liquid form. Examples of suitable diluents are aliphatic, cycloaliphatic, aromatic and mixed aromatic/aliphatic hydrocarbons with 3—8 carbon atoms per molecule, for instance propylene-1, butane, isobutane, n-hexane, n-heptane, cyclohexane, benzene, toluene and the xylenes.

In the case of polymerization in the liquid phase, it is preferable for the concentration of the titanium halide component to be set at about 0.001—0.5 mmole, calculated as titanium atom, and the concentration of the organometal compound at about 0.1—50 mmole, both per litre of liquid phase.

The polymerization temperature is normally between 190 and 475 K, preferably between 310 and 375 K. The pressure may be, for instance, between 100 and 3000 kPa.

If so desired, it is possible to control the molecular weight of the polymer during the polymerization process, for instance through the presence of hydrogen or another known molecular weight regulator.

The polymerization reaction may be carried out as a batch process or as a continuous process.

The invention will now be elucidated by means of the following non-restrictive example experiments and the comparative experiments.

Experiments, Comparative Experiments and Example Experiments
*Experiment I*
a. Preparation of the titanium halide component

75 ml of hexane and 75 ml of toluene are introduced into a dry 500 ml flask, flushed with nitrogen. Next, 5 ml of $TiCl_4$ is added. A solution of 5 g of o-cresol in 50 ml of hexane/toluene (1:1) is slowly dropped in at room temperature, after which the solution is heated for 2 hours at 353 K.

Next, 6.5 ml of ethyl benzoate (EB), dissolved in 50 ml of hexane, is added to this solution. The brown-black crystals of $TiCl_3$(o-

cresolate).EB which are formed at room temperature are separated off by filtration and washed with hexane.

22.2 g of MgCl$_2$ and 3.20 g of the TiCl$_3$(o-cresolate).EB complex obtained, are successively introduced into a stainless steel ball mill with a diameter of 8 cm and containing 8 balls. This mixture is ground for 18 hours in a nitrogen atmosphere.

b. Polymerization

1.3 l of hexane, 5 ml of tri-isobutyl aluminium (TIBA), 0.58 ml of ethyl benzoate and 0.655 g of the titanium halide component obtained as described under Ia, are successively introduced into a stainless steel reactor with a capacity of 3 l, provided with a mechanical agitator and flushed with nitrogen. While propylene is constantly fed in, the pressure in the reactor is raised to and maintained at 700 kPa. The temperature is kept at 333 K. After a polymerization time of 2 hours, the polymerization reaction is terminated and the polymer is separated off by filtration.

The activity amounts to 580 g of polypropylene (PP)/mmole Ti.h. The soluble polymer content is 6.5% relative to the total quantity of polymer produced.

*Comparative Experiment A*
a. Preparation of the titanium halide component

150 ml of hexane and 5 ml of TiCl$_4$ are introduced into a dry 500 ml flask, flushed with nitrogen. When the solution has cooled to 273 K, 6.5 ml of ethyl benzoate in 50 ml of hexane is dropped in. The TiCl$_4$.EB precipitate is separated off by filtration and washed with hexane a few times. 2.95 g of MgCl$_2$ and 3.40 g of the titanium complex obtained are ground for one night in the ball mill described in Experimental Example Ia.

b. Polymerization

Polymerization is carried out in a manner analogous to that described in Experimental Example Ib. The activity of the catalyst is 860 g PP/mmole Ti.h. The soluble polymer content is 7.0% relative to the total quantity of polymer produced.

*Experiment II*
a. Preparation of the titanium halide component

75 ml of toluene and 75 ml of hexane are introduced into a dry 500 ml flask, flushed with nitrogen. Next, 5 ml of TiCl$_4$ is added. A solution of 5.75 g of p-methoxy phenol is 50 ml of hexane/toluene (1:1) is slowly dropped in, after which the solution is heated for 2 hours at 353 K while nitrogen is led through.

Next, 6.5 g of ethyl benzoate, dissolved in 50 ml of hexane, is added drop by drop to this solution. The dark crystals of TiCl$_3$(p-methoxy-phenolate).EB are separated off by filtration and washed with hexane a few times.

24.0 g of MgCl$_2$ and 3.35 g of the TiCl$_3$(p-

methoxyphenolate).EB are successively introduced into the stainless steel ball mill with a diameter of 8 cm and containing 8 balls. This mixture is ground for 18 hours in a nitrogen atmosphere.

b. Polymerization

1.3 l of hexane, 5 ml of TIBA, 0.58 ml of ethyl benzoate and 0.150 g of the titanium halide component obtained as described under IIa are successively introduced into a stainless steel reactor with a capacity of 3 l, provided with a mechanical agitator and flushed with nitrogen. While propylene is constantly fed in, the pressure in the reactor is raised to and maintained at 700 kPa. The polymerization temperature is 333 K. After a polymerization temperature of 2 hours, the polymerization reaction is terminated and the polymer is separated off by filtration.

The activity amounts to 475 g PP/mmole Ti.h. The soluble polymer content amounts to 9.0% relative to the total quantity of polymer produced.

*Experiment III*

Experiment I is repeated, but now the polymerization time is 6 hours.

The activity amounts to 280 g PP/mmole Ti.h and the soluble polymer content amounts to 7.0% relative to the total quantity of polymer produced.

*Comparative Experiment B*

With the titanium halide component of Comparative Experiment A, polymerization is carried out in a manner analogous to that described in Experiment Ib, but now the polymerization time is 6 hours.

The activity amounts to 316 g PP/mmole Ti.h and the soluble polymer content amounts to 7.5% relative to the total of polymer produced.

*Experiment IV*

With the catalyst of Experiment IIa, polymerization is carried out in a manner analogous to that described in Experiment Ib, but now the polymerization time is 6 hours. The activity amounts to 270 g PP/mmole Ti.h. The soluble material content amounts to 11% relative to the total of polymer produced.

*Experiments V—VII*

With the respective catalysts of the Experiments I, II and III, three polymerization reactions are carried out in a manner analogous to that described in Experiment Ib. During the polymerization reaction, the gas absorption is measured as a function of time for a period of 6 hours.

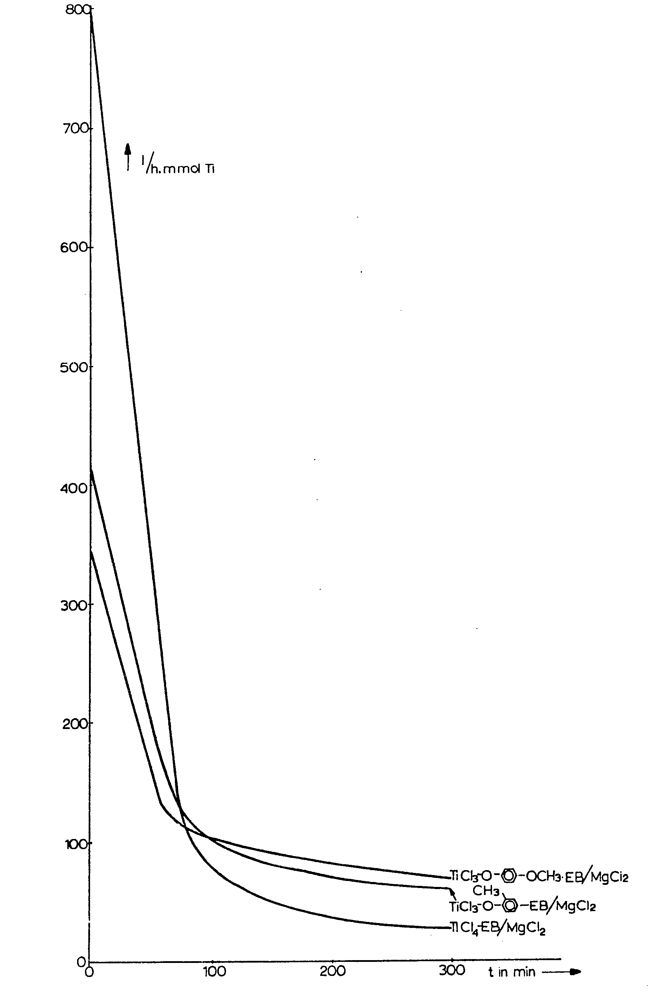

The figure in the annexe is a graphic representation of the gas absorption for each of the three catalysts, calculated per mmole Ti per hour. This figure demonstrates the difference in polymerization kinetics.

*Experiment VIII*

1.3 l of hexane, 5 ml of TIBA, 0.58 ml of ethyl benzoate, 0.665 g of the titanium halide component of Experiment I and 0.5 N l of $H_2$ are successively introduced into a stainless steel reactor with a capacity of 3 l, provided with a mechanical agitator and flushed with nitrogen. While propylene is constantly fed in, the pressure in the reactor is raised to and maintained at 700 kPa. The polymerization temperature is 333 K. After a polymerization time of 1 hour, the polymerization reaction is terminated and the polymer is separated off by filtration.

The activity amounts to 720 g PP/mmole Ti.h and the soluble polymer content amounts to 7.3% relative to the total quantity of polymer produced.

*Experiment IX*

2.40 g of $MgCl_2$ and 3.20 g of $TiCl_3$(o-cresolate).EB are successively introduced into a stainless steel ball mill with a diameter of 8 cm and containing 8 porcelain balls. This mixture is ground in a nitrogen atmosphere for 18 hours.

1.3 l of hexane, 5 ml of TIBA, 0.58 ml of EB and 0.143 g of the ground mixture of $MgCl_2$ and $TiCl_3$(o-cresolate).EB are successively introduced into a stainless steel reactor with a capacity of 3 l, provided with a mechanical agitator and flushed with nitrogen. While propylene is constantly fed in, the pressure in the reactor is raised to and maintained at · 700 kPa. The temperature is kept at 333 K.

After a polymerization time of 2 hours, the polymerization reaction is terminated and the polymer is separated off by filtration. The activity amounts to 385 g PP/mmole Ti.h. The soluble polymer content amounts to 6.1% relative to the total of polymer produced.

*Experiment X*

2.5 l of heptane, 10 ml of TIBA, 1.16 ml of ethyl benzoate, 1.23 g of the titanium halide component of Experiment I and 0.5 N l of $H_2$ are successively introduced into a stainless steel reactor with a capacity of 5 l, provided with a mechanical agitator and flushed with nitrogen. The reactor is pressurized to 700 kPa by feeding in propylene and then heated to 333 K, which temperature is maintained. The pressure is kept constant for 3 hours by feeding in propylene. Then the propylene supply is stopped and the pressure is lowered to 125 kPa. The polymerization reaction is continued for 1.5 hours by feeding in a mixture of ethylene and propylene (molar ratio of supply is 3.5:1) at a pressure of 300 kPa and a temperature of 333 K. The hydrogen concentration in the gas phase over the reaction mixture is kept constant at 4% by vol. After said period of 1.5 hours, the polymerization reaction is terminated by addition of isopropanol and the polymer is removed from the ractor. The polymer is separated off by filtration.

The ethylene content amounts to 10% (measured by means of infrared spectroscopy (IR)), the activity amounts to 430 g PP/mmole Ti.h and the soluble polymer content amounts to 7.9% relative to the total of polymer produced.

*Experiment XI*

2.5 l of heptane, 10 ml of TIBA, 1.16 ml of ethyl benzoate, 1.25 g of the titanium halide component of Experiment I and 0.3 N l of $H_2$ are successively introduced into a stainless steel reactor with a capacity of 5 l, provided with a mechanical agitator and flushed with nitrogen. The pressure in the reactor is raised to and maintained at 700 kPa by feeding in propylene. The reactor is heated to 333 K and kept at this temperature. After a polymerization time of 2 hours, the propylene supply is stopped and the pressure is lowered to 125 kPa. The polymerization reaction is then continued for 0.5 hour with a mixture of ethylene and propylene (molar ratio 3.5:1) at a pressure of 300 kPa and a temperature of 333 K. The hydrogen concentration in the gas phase over the reaction mixture is kept constant at 8% by vol. Subsequently, the polymerization reaction is terminated and the polymer suspension is removed from the reactor. The polymer is separated off by filtration.

The ethylene content amounts to 6% (measured by means of IR), the activity amounts to 480 g PP/mmole Ti.h and the dissolved polymer content amounts to 7.2%.

*Experiment XII*

2.5 l of heptane, 10 ml of TIBA, 1.16 ml of ethyl benzoate, 1.25 g of the titanium halide component of Experiment I and 0.5 N l of $H_2$ are successively introduced into a stainless steel autoclave with a capacity of 5 l, provided with a mechanical agitator and flushed with nitrogen. The reactor is pressurized to and maintained at 700 kPa, after which the reactor is heated to 333 K. After a polymerization time of 2 hours at this pressure, the propylene supply is stopped and the pressure is lowered to 125 kPa. The polymerization reaction is then continued for 0.5 hour with an ethylene-propylene mixture (molar ratio 3.5:1) at a pressure of 180 kPa and a temperature of 333 K. The hydrogen concentration in the gas phase is kept constant at 8% by vol. Subsequently, the polymerization reaction is terminated and the polymer suspension is removed from the reactor. The polymer is separated off by filtration.

The ethylene content amounts to 3% (measured by means of IR), the activity amounts to 425 g PP/mmole Ti.h and the dissolved polymer content amounts to 6.9%.

*Experiment XIII*

2.5 l of heptane, 10 ml of TIBA, 1.16 ml of ethyl benzoate, 1.25 g of the titanium halide component of Experiment I and 0.5 N l of $H_2$ are

successively introduced into a stainless steel reactor with capacity of 5 l, provided with a mechanical agitator and flushed with nitrogen. The pressure in the reactor is raised to and maintained at 700 kPa, after which the reactor is heated to 333 K. After a polymerization time of 0.5 hour, 1% by vol. of ethylene is added to the propylene flow. This mixture is fed in for 1.5 hours, after which the pressure is lowered to 125 kPa and a mixture of ethylene and propylene (molar ratio 5:1) is fed in. The pressure is thus raised to 180 kPa and the polymerization reaction is continued for 20 minutes. The hydrogen concentration is kept constant at 4%. The polymerization reaction is stopped and the polymer suspension is removed from the reactor. The polymer is separated off by filtration.

The ethylene content of the polymer amounts to 2.5% (measured by means of IR), the activity amounts to 430 g PP/mmole Ti.h and the dissolved polymer content amounts to 7.5%.

*Experiment XIV*

2.5 l of heptane, 10 ml of TIBA, 1.16 ml of ethyl benzoate, 1.25 g of the titanium halide component of Experiment I and 0.8 N l of $H_2$ are successively introduced into a stainless steel reactor with capacity of 5 l, provided with a mechanical agitator and flushed with nitrogen. The pressure in the reactor is raised to and maintained at 700 kPa, after which the reactor is heated to 333 K. After a polymerization time of 2 hours, the propylene supply is stopped and the pressure is lowered to 125 kPa. Subsequently, the polymerization reaction is continued for 1.5 hours by feeding in ethylene up to a pressure of 300 kPa, at a temperature of 333 K. The hydrogen concentration in the gas phase is maintained at 12%. The polymerization reaction is stopped and the polymer suspension is removed from the reactor. The polymer is separated off by filtration.

The ethylene content amounts to 13% (measured by means of IR), the activity amounts to 480 g PP/mmole Ti.h and the dissolved polymer content amounts to 6.4%.

**Claims**

1. Process for the polymerization of alkenes-1 and for the copolymerization of alkenes-1 with each other or with ethylene in at least two stages with application of a catalyst system consisting of a titanium halide component, containing a halogenated titanium compound, an electron donor and a magnesium halide, and an organometallic component derived from a metal of one of the groups I—III of the Periodic System of the Elements, characterized in that the halogenated titanium compound used is a titanium halide phenolate of the formula $Ti_nX_aA_b$, in which X represents a halogen atom and A the acid radical of a phenol, n is a whole number of at least 1, and a and b are such numbers that a/n and b/n are both 1—3, on the understanding that (a + b)/n is equal to 3—4, also characterized in that the polymerization time in the first stage is more than 0.5 hour.

2. Process according to claim 1, characterized in that X is chlorine.

3. Process according to claim 1 or 2, characterized in that A is a phenolate group with 6—12 carbon atoms.

4. Process according to claim 3, characterized in that A is a cresolate or methoxy phenolate group.

5. Process according to any one of the claims 1—4, characterized in that the halide: phenolate ratio in the titanium halide component is between 1:1 and 3:1.

6. Process according to claim 5, characterized in that the titanium halide phenolate used is a titanium (IV) trichloride monophenolate.

7. Process according to any one of the claims 1—6, characterized in that a block copolymer is produced.

8. Process according to claim 7, characterized in that in the first stage of the multistage process substantialy propylene or a higher alkene-1 is polymerized and in a subsequent step substantially ethylene.

9. Shaped object, consisting in whole or in part of polymer obtained with application of the process according to any one of the claims 1—8.

**Revendications**

1. Procédé de polymérisation d'alcènes-1 et de copolymérisation d'alcènes-1 entre eux ou avec de l'éthylène dans au moins deux étapes, en utilisant un système de catalyseur constitué d'un composant d'halogénure de titane contenant un mélange de titane halogené, un donneur d'électrons et un halogénure de magnésium, ainsi que d'un composant organométallique dérivé d'un métal d'un des groupes I—III du Système Périodique des Eléments, caractérisé en ce que le mélange de titane halogéné utilisé est un phénolate d'halogénure de titane de la formule $Ti_nX_aA_b$, dans laquelle X représente un atome d'halogène et A le radical acide d'un phénol, n un nombre entier d'au moins 1 alors que a et b sont des nombres tels que a/n et b/n sont tous les deux de 1—3, sous la réserve que (a + b)/n est égal à 3—4, caractérisé donc en ce que la durée de polymérisation dans la première étape est supérieure à 0,5 heure.

2. Procédé selon la revendication 1, caractérisé en ce que X est du chlore.

3. Procédé selon l'une des revendications 1 à 2, caractérisé en ce que A est un groupe de phénolate avec 6—12 atomes de carbone.

4. Procédé selon la revendication 3, caractérisé en ce que A est un crésolate ou un groupe de métoxyphénolate.

5. Procédé selon l'une des revendications 1 à

4, caractérisé en ce que le rapport halogénure: phénolate dans le composant d'halogénure de titane se situe entre 1:1 et 3:1.

6. Procédé selon la revendication 5, caractérisé en ce que le phénolate d'halogénure de titane est un monophénolate de trichlorure de titane (IV).

7. Procédé selon l'une des revendications 1 à 6, caractérisé en ce qu'on produit un copolymère en bloc.

8. Procédé selon la revendication 7, caractérisé en ce que, dans la première étape du processus à étapes multiples, on polymérise essentiellement du propylène ou un alcène-1 supérieur et dans une étape suivante essentiellement de l'éthylène.

9. Objet moulé consistant entièrement ou en partie de polymère obtenu par la mise en oeuvre du procédé selon l'une ou l'autre des revendications 1 à 8.

**Patentansprüche**

1. Verfahren zur Polymerisation von Alkenen-1 und zur Copolymerisation von Alkenen-1 miteinander oder mit Äthylen in mindestens zwei Stufen unter Verwendung eines Katalysatorsystems bestehend aus einer Titanhalogenidkomponente, die eine halogenierte Titanverbindung, einen Elektronendonator und ein Magnesiumhalogenid enthält, und einer organometallischen Komponente, abgeleitet von einem Metall aus einer der Gruppen I—III des Periodensystems dadurch gekennzeichnet, daß die verwendete halogenierte Titanverbindung ein Titanhalogenidphenolat der Formel $Ti_nX_aA_b$

ist, worin X ein Halogenatom und A den Säurerest eines Phenols darstellt, n eine ganze Zahl von mindestens 1 ist, und a und b solche Zahlen sind, daß a/n und b/n beide gleich 1—3 sind, unter der Bedingung, daß (a + b)/n gleich 3—4 ist, und daß die Polymerisationszeit in der ersten Stufe mehr als 0,5 h beträgt.

2. Verfahren nach Anspruch 1, dadurch gekennzeichnet, daß X Chlor ist.

3. Verfahren nach Anspruch 1 oder 2, dadurch gekennzeichnet, daß A eine Phenolatgruppe mit 6 bis 12 Kohlenstoffatomen ist.

4. Verfahren nach Anspruch 3, dadurch gekennzeichnet, daß A eine Cresolat- oder Methoxyphenolatgruppe ist.

5. Verfahren nach einem der Ansprüche 1 bis 4, dadurch gekennzeichnet, daß das Halogenid-Phenolat-Verhältnis in der Titanhaolgenidkomponente zwischen 1:1 und 3:1 beträgt.

6. Verfahren nach Anspruch 5, dadurch gekennzeichnet, daß das verwendete Titanhalogenid-phenolat ein Titan(IV)-trichloridmonophenolat ist.

7. Verfahren nach einem der Ansprüche 1 bis 6, dadurch gekennzeichnet, daß ein Blockcopolymer hergestellt wird.

8. Verfahren nach Anspruch 7, dadurch gekennzeichnet, daß in der ersten Stufe des Mehrstufenverfahrens im wesentlichen Propylen oder ein höheres Alken-1 polymerisiert wird und in einer nachfolgenden Stufe im wesentlichen Äthylen.

9. Formkörper, ganz oder zum Teil bestehend aus einem Polymeren, das bei Anwendung des Verfahrens gemäß einem der Ansprüche 1 bis 8 erhalten wurde.

**0 018 025**

1